# EUROPÄISCHE PATENTSCHRIFT

(11) **EP 3 770 303 B1**
(45) Veröffentlichungstag und Bekanntmachung des Hinweises auf die Patenterteilung: **06.07.2022**
(21) Anmeldenummer: 19199867.3
(22) Anmeldetag: 26.09.2019
(51) Int. Cl.: C25B 1/04, C25B 9/05, C25B 9/65, C25B 9/77, C25B 11/03, H01M 8/0247, H01M 8/0263, H01M 8/2432

(54) **ELEKTRODENPACKUNGSEINHEIT FÜR EINEN STAPELAUFBAU EINES ELEKTROCHEMISCHEN REAKTORS**
ELECTRODE PACKING UNIT FOR A STACK STRUCTURE OF AN ELECTROCHEMICAL REACTOR
UNITÉ D'EMBALLAGE D'ÉLECTRODE POUR UNE STRUCTURE D'EMPILEMENT D'UN RÉACTEUR ÉLECTROCHIMIQUE

(30) Priorität: 26.07.2019 EP 19188710
(43) Veröffentlichungstag der Anmeldung: 27.01.2021
(73) Patentinhaber: Zentrum für Sonnenenergie- und Wasserstoff-Forschung Baden-Württemberg, 70563 Stuttgart (DE)
(72) Erfinder: Brinner, Andreas, 71277 Rutesheim (DE); Lenz, Ulli, 71384 Weinstadt (DE); Kindl, Verena, 70435 Stuttgart (DE); Kolb, Michael, 56479 Westernohe (DE)
(74) Vertreter: Patentanwälte Ruff, Wilhelm, Beier, Dauster & Partner mbB

(56) Entgegenhaltungen:
- DE-A1-102007 005 232
- JP-A- 2010 033 788
- US-A1- 2003 188 966
- US-A1- 2005 019 642
- US-A1- 2009 050 472

## Beschreibung

Die Erfindung bezieht sich auf eine Elektrodenpackungseinheit nach dem Oberbegriff des Anspruchs 1. Eine solche Elektrodenpackungseinheit eignet sich für einen Stapelaufbau eines elektrochemischen Reaktors und umfasst eine fluiddichte Bipolarplatte, eine erste Elektrodenplatte und eine zweite Elektrodenplatte, die jeweils mit Abstand auf gegenüberliegenden Seiten der Bipolarplatte angeordnet sind, sowie eine erste Stromübertragerstruktur zwischen der Bipolarplatte und der ersten Elektrodenplatte und eine zweite Stromübertragerstruktur zwischen der Bipolarplatte und der zweiten Elektrodenplatte.

Elektrodenpackungseinheiten dieser Art werden beispielsweise in Blockstapelaufbauten von Elektrolysereaktoren, z.B. zur alkalischen Wasserelektrolyse von Wasser atmosphärisch oder unter Druck, und von Brennstoffzellenreaktoren verwendet. In diesen auch als Stackdesign bezeichneten Reaktorausführungen sind die einzelnen Komponenten zur Bildung einer Mehrzahl von elektrisch verkoppelten Reaktorzellen, d.h. Elektrolysezellen oder Brennstoffzellen, aufeinander bzw. aneinander gestapelt. Zu diesen Komponenten gehören insbesondere Zellmembranen, Bipolarplatten, als Anode bzw. Kathode wirkende, von Elektrodenplatten gebildete Elektrodenflächen, Stromübertragerstrukturen zwischen der Bipolarplatte einerseits und einer jeweils angrenzenden Elektrodenplatte andererseits, Zellrahmen, an denen die plattenförmigen Komponenten randseitig gehalten sind, umlaufende Dichtungen und Befestigungs-Druckringe. In der Praxis verwendete Blockstapelaufbauten bestehen typischerweise aus identischen, aufeinander geschichteten Zellanordnungen mit ca. 5 bis ca. 350 Zellen. Diverse Stapelaufbauten für solche elektrochemische Reaktoren sind in den Patentschriften US 4.124.478, US 4.339.324, US 4.758.322, US 6.117.287, US 6.555.267 B1 und EP 2 898 115 B1 sowie den Offenlegungsschriften US 2002/0110719 A1, US 2002/0175072 A1, US 2010/0136455 A1, US 2010/0187102 A1, DE 1 643 042, DE 27 29 640 A1 und DE 102 59 386 A1 offenbart.

In einem solchen Blockstapel befinden sich in Stapelrichtung hintereinander jeweils eine Membran, eine Elektrodenplatte, eine Stromübertragerstruktur, eine Bipolarplatte, eine weitere Stromübertragerstruktur, eine weitere Elektrodenplatte und dann wieder eine Membran in sich wiederholender Anordnung. Die Stapelfolge von Elektrodenplatte, Stromübertragerstruktur, Bipolarplatte, Stromübertragerstruktur und Elektrodenplatte, die sich zwischen je zwei Membranen befindet, wird vorliegend wie üblich als Elektrodenpackungseinheit bezeichnet. In entsprechenden Ausführungen ist diese Elektrodenpackungseinheit als eigenständige Baueinheit vormontiert, wodurch dann für den Aufbau des Reaktorstapels je eine Elektrodenpackungseinheit und eine die Membran enthaltende Membraneinheit alternierend aneinander gestapelt werden. Eine derartige Vormontage ist jedoch für die Erfindung nicht zwingend, die vorliegend betrachtete Elektrodenpackungseinheit kann in entsprechenden alternativen Ausführungen auch ohne Vormontage gebildet werden, d.h. erst bei der Bildung des Blockstapels.

Die Bipolarplatte ist fluiddicht ausgeführt und trennt die beteiligten Reaktionsfluide. Die Elektrodenplatten und die Stromübertragerstrukturen sind fluiddurchlässig ausgeführt, damit die Reaktionsfluide in den Zwischenräumen zwischen der Bipolarplatte einerseits und je einer der beiden angrenzenden Elektroden andererseits strömen und an die Membran gelangen können. Die Elektrodenplatten sind z.B. von Lochblechelementen gebildet, wobei die verbleibende metallische Elektrodenfläche im Vergleich zur Gesamtausdehnung der Elektrodenplatten ausreichend groß bleiben sollte. Die Stromübertragerstrukturen dienen, wie ihr Name sagt, zur elektrischen Stromübertragung zwischen der Bipolarplatte einerseits und den beidseits an die Bipolarplatte angrenzenden Elektrodenplatten andererseits, von denen z.B. die eine als Anode und die andere als Kathode wirkt.

Meist werden bislang zwei verschiedene Typen von Stromübertragerstrukturen verwendet. Ein erster Typ sind flexible bzw. elastische Metallgestricke oder Metallgewebe. Dieser Typ von Stromübertragerstrukturen kann den bei der Stapelmontage und/oder im Betrieb auftretenden Pressdruckbelastungen in hohem Maß nachgiebig ausweichen, hat jedoch die Schwierigkeit, dass die Kontaktpunkte des Gestrickes bzw. Gewebes zu den angrenzenden Platten nicht vordefiniert sind, was zu einer undefinierten Stromübergangsverteilung und/oder einer ungleichmäßigen Stromdichtebelastung auf den Elektrodenplatten bzw. den von diesen gebildeten Elektrodenflächen führen kann. Ein weiterer, zweiter Typ von Stromübertragerstrukturen wird von vorgeformten Streckmetallelementen oder Lochblechelementen oder dgl. gebildet. Dieser Typ von Stromübertragerstrukturen kann definierte Kontaktpunkte zu den Elektrodenflächen und den Bipolarplatten bereitstellen, hat jedoch die Schwierigkeit, dass diese vergleichsweise starren Bauteile den genannten Pressdrücken allenfalls geringfügig elastisch nachgeben können. Zudem kann es bei diesem Typ zu punktuell hohen Stromdichtebelastungen kommen, wenn die gesamte Kontaktfläche zwischen Stromübertragerstruktur einerseits und Elektrodenplatte und/oder Bipolarplatte andererseits relativ klein gehalten wird, um Material und Gewicht einzusparen und die Durchlässigkeit des Zwischenraums zwischen Bipolarplatte und Elektrodenplatte bzw. Membran für die Reaktionsfluide möglichst wenig zu stören.

In der Offenlegungsschrift US 2003/0188966 A1 sind Stromübertragerstrukturen offenbart, die von wellblechartigen Elementen mit im Querschnitt im Wesentlichen V-förmigen oder U-förmigen Erhebungen beziehungsweise Vertiefungen oder von gelochten plattenförmigen Elementen gebildet sind, in deren gelochten Bereichen rechteckförmige Plattenabschnitte als Blattfederelemente aus der Plattenebene herausgebogen sind, die sich mit ihrem freien Blattfederende elastisch nachgiebig gegen eine Elektrodenplatte anlegen, um diese elektrisch zu kontaktieren. Dabei können die Blattfederelemente während der Montage der betreffenden Elektrodenpackungseinheit mit ihren freien Blattfederenden an der Elektrodenplatte entlanggleiten, während die gelochte Stromübertragerplatte bis zu einem gewünschten Abstand gegen die Elektrodenplatte angelegt wird.

Weitere herkömmliche Stromübertragerstrukturen, die plattenförmige Elemente mit vorstehenden Blattfederelementen oder stiftförmig vorstehenden Elementen aufweisen, sind in den Offenlegungsschriften US 2005/0019642 A1, DE 10 2007 005 232 A1, US 2009/0050472 A1 und JP 2010-033788 A offenbart.

Der Erfindung liegt als technisches Problem die Bereitstellung einer Elektrodenpackungseinheit der eingangs genannten Art zugrunde, die insbesondere hinsichtlich der verwendeten Stromübertragerstrukturen Vorteile gegenüber dem oben erwähnten Stand der Technik bietet.

Die Erfindung löst dieses Problem durch die Bereitstellung einer Elektrodenpackungseinheit mit den Merkmalen des Anspruchs 1. Vorteilhafte Weiterbildungen der Erfindung sind in den Unteransprüchen angegeben.

Bei der erfindungsgemäßen Elektrodenpackungseinheit beinhaltet die erste und/oder die zweite Stromübertragerstruktur mindestens ein Stromübertragerelement, das eine zentrische Kontaktfläche und eine Mehrzahl von Stromübertragerarmen aufweist, die sich mit einem mäanderförmigen Verlauf von der zentrischen Kontaktfläche radial nach außen bis zu einem Außenrand des Stromübertragerelements erstrecken und die zentrische Kontaktfläche senkrecht zu ihrer Flächenebene elastisch nachgiebig am Außenrand halten. Dabei kontaktiert das Stromübertragerelement mit seiner zentrischen Kontaktfläche die Bipolarplatte und mit seinem Außenrand die erste oder die zweite Elektrodenplatte, oder das Stromübertragerelement kontaktiert alternativ mit seiner zentrischen Kontaktfläche die erste oder die zweite Elektrodenplatte und mit seinem Außenrand die Bipolarplatte. Unter Kontaktierung ist vorliegend mindestens eine elektrisch leitende Verbindung zu verstehen, vorzugsweise darüber hinaus auch eine mechanische Verbindung.

Die Verwendung eines solchen Stromübertragerelements für die betreffende Stromübertragerstruktur bietet große Vorteile sowohl hinsichtlich Fertigungsaufwand als auch hinsichtlich Stromübertragungseigenschaften und Pressdruckbelastung der Stromübertragerstruktur.

So ist das Stromübertragerelement in der Lage, mit seinen Stromübertragerarmen den Abstand zwischen zugeordneter Elektrodenplatte einerseits und Bipolarplatte andererseits zu überbrücken, und da die Stromübertragerarme mäanderförmig verlaufen und die zentrische Kontaktfläche senkrecht ihrer Flächenebene elastisch nachgiebig von den Stromübertragerarmen am Außenrand gehalten wird, ist das Stromübertragerelement in der Lage, auf einwirkende Pressdrücke bis zu einem gewissen, ausreichenden Grad elastisch nachgiebig zu reagieren. Das Stromübertragerelement kann auf diese Weise Abstandsschwankungen zwischen Bipolarplatte und Elektrodenplatte elastisch ausgleichen, die durch Druckbelastungen während der Montage eines entsprechenden Blockstapels für einen elektrochemischen Reaktor und/oder im Betrieb eines solchen Reaktors auftreten können. In vorteilhaften Ausführungen beinhaltet der mäanderförmige Verlauf des jeweiligen Stromübertragerarms mindestens drei Mäanderwindungen, z.B. zwischen drei und zwölf oder zwischen drei und zwanzig Mäanderwindungen. Die Weite, d.h. die Querausdehnung, der Mäanderwindungen ist vorzugsweise kleiner als die radiale Länge der Stromübertragerarme, z.B. nur höchstens halb so groß oder nur höchstens ein Drittel so groß, insbesondere z.B. zwischen einem Zehntel und einem Drittel der radialen Länge der Stromübertragerarme.

Das Stromübertragerelement ermöglicht zudem durch ihre Ausführung als vordefinierbare Struktur von Kontaktfläche, Stromübertragerarmen und Außenrand eine definierte Stromübertragung zwischen Elektrodenplatte und Bipolarplatte und insbesondere auch eine definierte Stromübergangsverteilung auf den Elektrodenflächen der Elektrodenplatten. Des Weiteren ist das Stromübertragerelement mit relativ geringem Aufwand herstellbar, z.B. einfach aus einem ebenen Plattenrohling durch Ausschneiden, z.B. mittels Wasserstrahlschneiden oder Laserstrahlschneiden, Ausstanzen oder eine ähnliche herkömmliche Fertigungstechnik.

Für die äußere Form der Bipolarplatten und der Elektrodenplatten und die Struktur der Elektrodenplatten sind alle üblichen Ausführungsarten verwendbar, ohne Einschränkung durch die spezifische Stromübertragerstruktur gemäß der Erfindung. So sind für die Bipolarplatte und die Elektrodenplatten alle üblichen Außenformen möglich, wie kreisförmig, elliptisch oder polygonal, z.B. rautenförmig, rechteckig oder speziell quadratisch.

In einer Weiterbildung der Erfindung ist das Stromübertragerelement einteilig mit der ersten oder der zweiten Elektrodenplatte gefertigt und mit seiner zentrischen Kontaktfläche an der Bipolarplatte befestigt. Dazu kann das Stromübertragerelement beispielsweise aus einem im Übrigen die betreffende Elektrodenplatte bildenden, ebenen Plattenrohling ausgestanzt oder ausgeschnitten oder mit einem anderen herkömmlichen Verfahren aus diesem herausgeformt sein. Seine zentrische Kontaktfläche wird dann aus der betreffenden Plattenebene herausbewegt, um an der Bipolarplatte befestigt zu werden, wobei sie über die Stromübertragerarme elastisch mit dem Außenrand und dadurch mit der Elektrodenplatte verbunden bleibt. Diese Realisierung des Stromübertragerelements ermöglicht sehr vorteilhaft einen dreilagigen Aufbau der Elektrodenpackungseinheit aus der Bipolarplatte und den beiden Elektrodenplatten mit einteilig angekoppelter Stromübertragerstruktur unter Verwendung von nur zwei unterschiedlichen Plattenelementen, eines für die Bipolarplatte und eines für die jeweilige Elektrodenplatte und die mit ihr einteilige, zugeordnete Stromübertragerstruktur.

In einer alternativen Weiterbildung der Erfindung ist das Stromübertragerelement als separates Bauteil mit ringförmigem Außenrand gefertigt, wobei es mit seiner zentrischen Kontaktfläche an der Bipolarplatte und mit seinem Außenrand an der ersten oder der zweiten Elektrodenplatte befestigt ist oder alternativ mit seiner zentrischen Kontaktfläche an der ersten oder der zweiten Elektrodenplatte und mit seinem Außenrand an der Bipolarplatte befestigt ist. Die Elektrodenpackungseinheit lässt sich in diesem Fall als fünflagiger Aufbau aus der Bipolarplatte, den beiden Elektrodenplatten, die von identischer Bauart sein können, und den beiden Stromübertragerstrukturen mit den dazu zwischen die Bipolarplatte und die jeweilige Elektrodenplatte eingefügten Stromübertragerelementen realisieren.

Diese Realisierung hat den Vorteil, dass die Elektrodenplatten in ihrer Struktur unabhängig von der Stromübertragerstruktur gehalten werden können. Das Stromübertragerelement wird in diesem Fall nicht aus einem Plattenelement heraus gebildet, das dann im Übrigen als Elektrodenplatte fungiert, sondern wird unabhängig von der Elektrodenplatte als eigenständiges Bauteil bereitgestellt. Es kann beispielsweise als separates scheibenförmiges Bauteil durch Ausstanzen, Ausschneiden oder dergleichen aus einem ebenen Plattenrohling hergestellt werden. Weiter bietet diese Realisierung variabel die Möglichkeit, das Stromübertragerelement mit seiner zentrischen Kontaktfläche wahlweise an der Bipolarplatte oder alternativ an der zugehörigen Elektrodenplatte zu befestigen, wobei es mit seinem Außenrand an der jeweils anderen Platte befestigt wird.

In einer Weiterbildung der Erfindung ist der Außenrand des Stromübertragerelements kreisförmig bzw. kreisringförmig. Diese kreisförmige Struktur des Stromübertragerelements ist für viele Anwendungsfälle optimal. Dies gilt sowohl hinsichtlich geringem Fertigungsaufwand als auch hinsichtlich des damit erzielbaren Stromübertragungsverhaltens. Die Kreisform braucht kein exakter Kreis sein, sondern beinhaltet auch Ausführungen, bei denen der Außenrand geringfügig von der exakten Kreisform abweicht, z.B. durch optional am Außenrand gebildete Fixiernasen.

In einer Weiterbildung der Erfindung ist ein radialer Abstand zwischen der zentrischen Kontaktfläche und dem Außenrand des Stromübertragerelements größer als eine Maximalerstreckung der zentrischen Kontaktfläche. Diese Dimensionierungsmaßnahme ist von spezifischem Vorteil im Hinblick auf eine optimale Abstimmung zwischen der Flächenausdehnung der zentrischen Kontaktfläche einerseits und der radialen Länge der mäanderförmigen Stromübertragerarme andererseits, wobei diese radiale Länge der Stromübertragerarme im Zusammenwirken mit deren Mäanderstruktur das Maß an elastischer Nachgiebigkeit zum Halten der zentrischen Kontaktfläche am Außenrand bestimmt.

In einer Weiterbildung der Erfindung weist das Stromübertragerelement mehr als zwei Stromübertragerarme auf. Die somit drei oder mehr Stromübertragerarme begünstigen zum einen eine hohe Stromübertragungsfähigkeit, ohne dass zu hohe Stromdichten auftreten, und zum anderen ein sicheres elastisches Halten der zentrischen Kontaktfläche am Außenrand. Für entsprechende Anwendungen ist es günstig, wenn das Stromübertragerelement deutlich mehr als zwei Stromübertragerarme aufweist, beispielsweise mehr als fünf oder in vielen Fällen noch besser mehr als sieben Stromübertragerarme, z.B. zwischen acht und zwölf Stromübertragerarme. Durch Wahl der geeigneten Anzahl von Stromübertragerarmen kann das Stromübertragerelement hinsichtlich Stromübertragungsverhalten und hinsichtlich seiner mechanischen Eigenschaften optimal auf den jeweiligen Anwendungsfall abgestimmt werden.

In einer Weiterbildung der Erfindung sind mehrere dieser Stromübertragerelemente vorgesehen, wobei die erste Stromübertragerstruktur und die zweite Stromübertragerstruktur jeweils mindestens ein erstes bzw. mindestens ein zweites Stromübertragerelement beinhalten. Dabei ist die Anordnung für mindestens ein erstes Stromübertragerelement der ersten Stromübertragerstruktur und mindestens ein zweites Stromübertragerelement der zweiten Stromübertragerstruktur auf gegenüberliegenden Seiten der Bipolarplatte so gewählt, dass das erste und das zweite Stromübertragerelement beide mit ihren zentrischen Kontaktflächen an der Bipolarplatte befestigt sind und sich hierbei mit ihren zentrischen Kontaktflächen überlappen.

Dies bedeutet, dass die beiden betreffenden zentrischen Kontaktflächen auf den beiden gegenüberliegenden Seiten der Bipolarplatte zueinander fluchtend, d.h. vollständig überlappend, oder alternativ teilweise überlappend angeordnet sind. Diese Maßnahme hat zur Folge, dass dementsprechend Druckbelastungen der Bipolarplatte über die angrenzenden Stromübertragerstrukturen an den beiden Seiten der Bipolarplatte auf vollständig oder partiell deckungsgleiche Flächenbereiche der Bipolarplatte einwirken, was für die Übertragung der Druckkräfte bzw. deren Kompensation von Vorteil ist.

In einer Weiterbildung der Erfindung sind mehrere der Stromübertragerelemente vorgesehen, wobei die erste und/oder die zweite Stromübertragerstruktur mehrere über die Ausdehnung der Bipolarplatte verteilt angeordnete, zugehörige, erste bzw. zweite Stromübertragerelemente beinhaltet. Durch diese verteilte Anordnung mehrerer Stromübertragerelemente lässt sich das Stromübertragungsverhalten der Stromübertragerstuktur optimieren. Die elektrischen Ströme können an den entsprechend mehreren, über die Ausdehnung der Bipolarplatte und damit auch der jeweils gegenüberliegenden Elektrodenplatte hinweg verteilt angeordneten Bereiche abgegriffen und übertragen werden, wodurch sich hohe Stromdichten vermeiden lassen und eine definierte und gleichmäßige Stromübergangsverteilung auf den Elektrodenflächen erzielbar ist. In vorteilhaften Ausführungen beinhalten sowohl die erste als auch die zweite Stromübertragerstruktur jeweils eine Mehrzahl von verteilt angeordneten, zugehörigen, ersten bzw. zweiten Stromübertragerelementen.

In einer Ausgestaltung der Erfindung sind die ersten Stromübertragerelemente und/oder die zweiten Stromübertragerelemente mit gleichen Nachbarabständen über eine Flächenausdehnung der Bipolarplatte und der Elektrodenplatten hinweg und/oder auf unterschiedlichen Radien bezüglich eines Mittenbereichs der Bipolarplatte und der Elektrodenplatten in Umfangsrichtung verteilt angeordnet.

Dies sind vorteilhafte Ausführungen hinsichtlich einer für die meisten Anwendungsfälle optimalen Verteilung der Stromübertragerelemente für die betreffende Stromübertragerstruktur über die Ausdehnung der Bipolarplatte bzw. der Elektrodenplatte hinweg. Die Bipolarplatte und die Elektrodenplatten können dabei von einer beliebigen, üblichen Außenform sein, wie kreisförmig, elliptisch oder polygonal, z.B. rautenförmig, rechteckig oder speziell quadratisch.

Vorteilhafte Ausführungsformen der Erfindung sind in den Zeichnungen dargestellt. Diese und weitere vorteilhafte Ausführungsformen der Erfindung werden nachfolgend unter Bezugnahme auf die Zeichnungen näher beschrieben. Hierbei zeigen:
- Fig. 1: eine schematische Schnittansicht eines Stapelaufbaus für einen elektrochemischen Reaktor mit drei gezeigten Reaktorzellen,
- Fig. 2: eine schematische Längsschnittansicht durch eine z.B. im Stapelaufbau von Fig. 1 verwendbare Elektrodenpackungseinheit,
- Fig. 3: eine schematische Teildraufsicht auf eine Elektrodenplatte und eine Stromübertragerstruktur der Elektrodenpackungseinheit von Fig. 2,
- Fig. 4: eine Draufsicht auf eine Elektrodenplatte und eine Stromübertragerstruktur entsprechend Fig. 3 in einer Gesamtansicht mit modifizierter Elektrodenplatte und modifizierter Stromübertragerstruktur,
- Fig. 5: eine Draufsicht auf ein für die Stromübertragerstruktur von Fig. 4 verwendetes Stromübertragerelement,
- Fig. 6: eine ausschnittweise Längsschnittansicht einer in einem Stapelaufbau letzten Elektrodenplatte mit zugeordneter Stromübertragerstruktur,
- Fig. 7: eine Ansicht entsprechend Fig. 4 für eine Variante mit einer einteilig mit der Elektrodenplatte gebildeten Stromübertragerstruktur,
- Fig. 8: eine Detailansicht von Fig. 7 im Bereich eines von mehreren Stromübertragerelementen der Stromübertragerstruktur,
- Fig. 9: eine Draufsicht auf eine Elektrodenplatte mit dahinterliegender Stromübertragerstruktur und
- Fig. 10: ein Detailausschnitt einer Längsschnittansicht nach Art von Fig. 2 für eine fünflagige Elektrodenpackungseinheit im Bereich eines Stromübertragerelements.

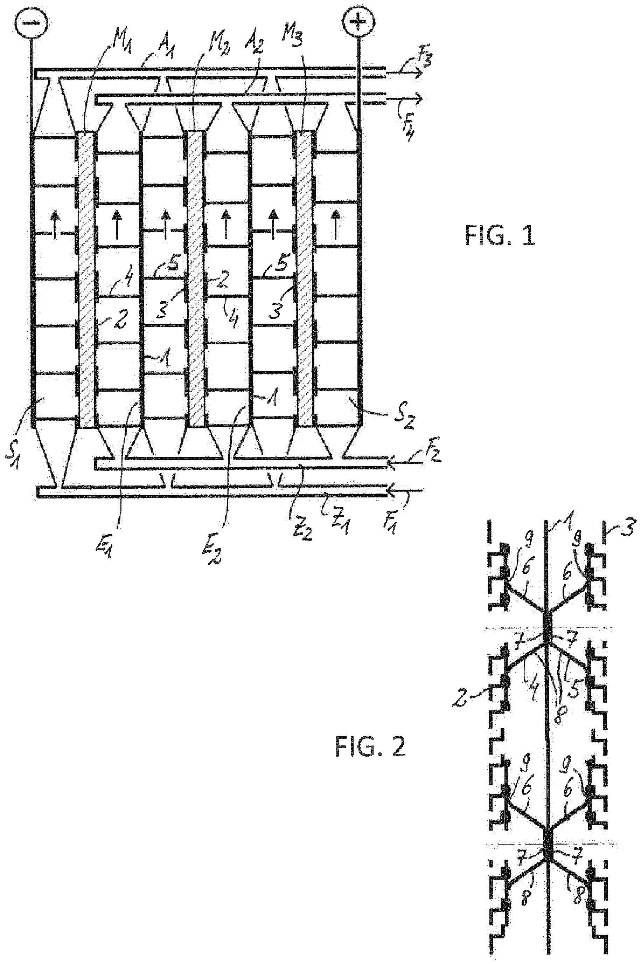

Der in Fig. 1 gezeigte Stapelaufbau eines elektrochemischen Reaktors eignet sich beispielsweise für einen Elektrolysereaktor oder einen Brennstoffzellenreaktor und umfasst in herkömmlicher und sich wiederholender Abfolge jeweils eine Membraneinheit M₁, M₂, ... und eine Elektrodenpackungseinheit E₁, E₂ ..., letztere oft auch als Elektrodenpackage bezeichnet, wobei in Fig. 1 beispielhaft ein Aufbau mit drei Reaktorzellen gezeigt ist, d.h. es sind drei Membraneinheiten M₁, M₂, M₃, zwei zwischenliegende Elektrodenpackungseinheiten E₁, E₂ und je eine Stapelabschlusseinheit S₁, S₂ an den Stirnenden des Stapelaufbaus gezeigt.

Die jeweilige Elektrodenpackungseinheit E₁, E₂, ... beinhaltet eine fluiddichte Bipolarplatte 1, eine erste Elektrodenplatte 2 und eine zweite Elektrodenplatte 3, die jeweils mit Abstand auf gegenüberliegenden Seiten der Bipolarplatte 1 angeordnet sind, sowie eine erste Stromübertragerstruktur 4 zwischen der Bipolarplatte 1 und der ersten Elektrodenplatte 2 und eine zweite Stromübertragerstruktur 5 zwischen der Bipolarplatte 1 und der zweiten Elektrodenplatte 3.

Über zwei Zuführungen Z₁, Z₂ erfolgt die Zuführung der benötigten Reaktionsfluide F₁, F₂ an einer Längsseite des Stapelaufbaus in die als Reaktionsräume dienenden Zwischenräume zwischen der jeweiligen Bipolarplatte 1 und der jeweils mit Abstand gegenüberliegenden Elektrodenplatte 2, 3. Auf der gegenüberliegenden oder alternativ einer anderen Längsseite des Stapelaufbaus erfolgt die Abführung von entsprechenden Reaktionsfluiden F₃, F₄ über zwei zugehörige Fluidabführungen A₁, A₂. Im jeweiligen Zwischenraum zwischen einer Bipolarplatte 1 und einer Elektrodenplatte 2, 3 ist eine Stromübertragerstruktur 4 eingebracht, welche die sich jeweils gegenüberliegenden beiden Platten auf Abstand hält und für die benötigte Stromübertragung sorgt und in Fig. 1 nur schematisch angedeutet ist. Im Anwendungsfall einer alkalischen Wasserelektrolyse werden als Reaktionsfluide F₁, F₂ Wasser (H₂O) und Kalilauge (KOH) zugeführt, die abgeführten Reaktionsfluide F₃, F₄ sind dann Wasserstoff (H2) und Sauerstoff (O₂), die in den kathodenseitigen bzw. den anodenseitigen Zwischenräumen gebildet werden. In typischen Realisierungen beträgt der Abstand der Elektrodenplatten 2, 3 von der Bipolarplatte 1 und damit die Weite der Zwischenräume ca. 1mm bis ca. 7mm, die Flächenausdehnung der Platten 1, 2, 3 jeweils ca. 100cm² bis ca. 7000cm² für Druckelektrolyseblöcke und bis zu etwa 50000cm² für drucklose Elektrolyse-Stapelreaktoren.

Für den erwähnten, als solchen herkömmlichen Stapelaufbau von Fig. 1 stellt die Erfindung für die jeweilige Elektrodenpackungseinheit E₁, E₂, ... die erfindungsgemäße Elektrodenpackungseinheit bereit, auf die nachstehend in Verbindung mit den Fig. 2 bis 9 näher eingegangen wird, in denen neben anderen, nachstehend erwähnten Ausführungsformen einige beispielhafte Ausführungsformen veranschaulicht sind.

Die erste und/oder die zweite Stromübertragerstruktur 4, 5 in Fig. 1 beinhaltet, wie in Fig. 2 dargestellt, bei der erfindungsgemäßen Elektrodenpackungseinheit mindestens ein Stromübertragerelement 6, das eine zentrische Kontaktfläche 7 und eine Mehrzahl von Stromübertragerarmen 8 aufweist. Die Stromübertragerarme 8 erstrecken sich mit einem mäanderförmigen Verlauf von der zentrischen Kontaktfläche 7 radial nach außen bis zu einem Außenrand 9 des Stromübertragerelements 6 und halten die zentrische Kontaktfläche 7 senkrecht zu ihrer Flächenebene elastisch nachgiebig am Außenrand 9. Dabei kontaktiert das Stromübertragerelement 6 mit seiner zentrischen Kontaktfläche 7 die Bipolarplatte 1 und mit seinem Außenrand 9 die erste oder die zweite Elektrodenplatte 2, 3, oder das Stromübertragerelement 6 kontaktiert alternativ mit seiner zentrischen Kontaktfläche 7 die erste oder die zweite Elektrodenplatte 2, 3 und mit seinem Außenrand 9 die Bipolarplatte 1.

In entsprechenden Realisierungen beinhaltet der mäanderförmige Verlauf des jeweiligen Stromübertragerarms 8 mindestens drei Mäanderwindungen, in den gezeigten Beispielen fünf Mäanderwindungen, alternativ z.B. bis zu ca. zwanzig Mäanderwindungen. Die Weite, d.h. die Querausdehnung, der Mäanderwindungen ist vorzugsweise kleiner als die radiale Länge der Stromübertragerarme 8, z.B. nur höchstens halb so groß oder nur höchstens ein Drittel so groß, in den gezeigten Beispielen ca. ein Fünftel bis ein Viertel der radialen Länge der Stromübertragerarme 8.

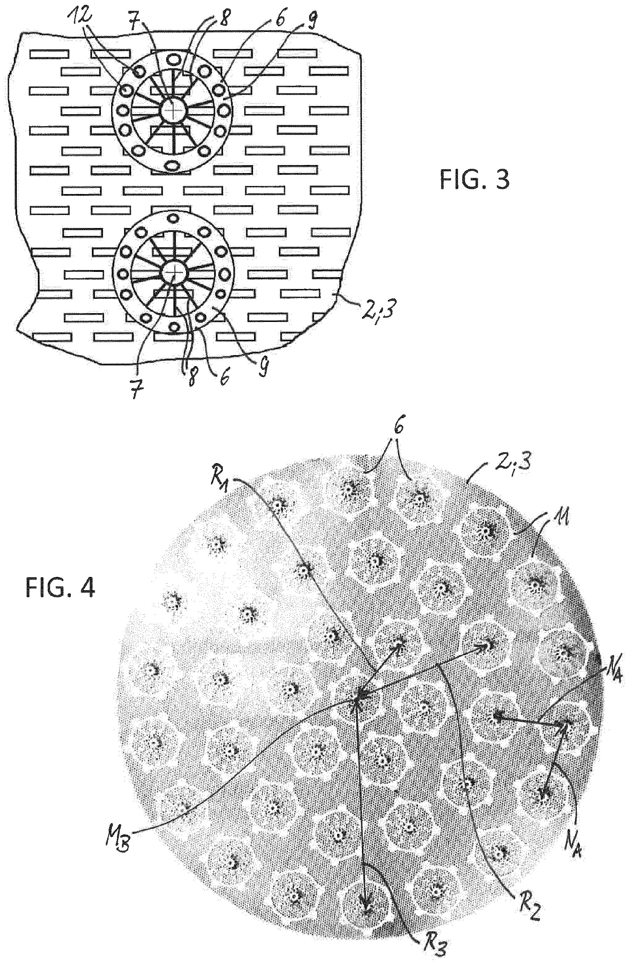

In entsprechenden Ausführungen sind die fluiddurchlässigen Elektrodenplatten 2, 3 baugleich oder alternativ als Bauteile mit unterschiedlicher Struktur gefertigt, z.B. als Lochblech- oder Schlitzblechelemente. Die Fig. 2 und 3 veranschaulichen Schlitzblechausführungen, die Fig. 4 und 7 bis 9 veranschaulichen Lochblechausführungen für die jeweilige Elektrodenplatte 2, 3.

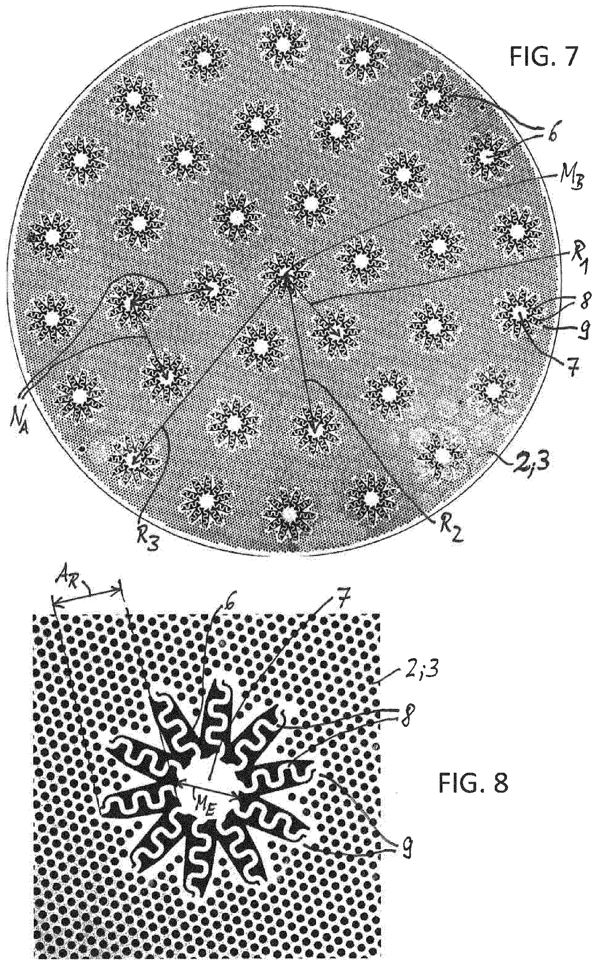

In vorteilhaften Ausführungen ist, wie beim in den Fig. 7 und 8 gezeigten Ausführungsbeispiel, das Stromübertragerelement 6 einteilig mit der ersten oder der zweiten Elektrodenplatte 2, 3 gefertigt, wobei es in diesem Fall mit seiner zentrischen Kontaktfläche 7 an der Bipolarplatte 1 befestigt ist. Diese Realisierung des Stromübertragerelements 6 ermöglicht sehr vorteilhaft einen dreilagigen Aufbau der Elektrodenpackungseinheit aus der Bipolarplatte 1 und den beiden Elektrodenplatten 2, 3 mit einteilig angekoppelter Stromübertragerstruktur 4 unter Verwendung von nur zwei unterschiedlichen Plattenelementen, eines für die Bipolarplatte 1 und eines für die jeweilige Elektrodenplatte 2, 3 und die mit ihr einteilige, zugeordnete Stromübertragerstruktur 4.

In alternativen Ausführungen ist das Stromübertragerelement 6, wie in den Ausführungsbeispielen der Fig. 2 bis 6, 9 und 10, als separates Bauteil mit ringförmigem Außenrand 9 gefertigt, wobei es in diesen gezeigten Beispielen mit seiner zentrischen Kontaktfläche 7 an der Bipolarplatte 1 und mit seinem Außenrand 9 an der ersten bzw. der zweiten Elektrodenplatte 2, 3 befestigt ist oder wobei es alternativ in nicht gezeigten Realisierungen mit seiner zentrischen Kontaktfläche 7 an der ersten bzw. der zweiten Elektrodenplatte 2, 3 und mit seinem Außenrand 9 an der Bipolarplatte 1 befestigt ist. Dabei sind in Fig. 3 die Stromübertragerelemente 6 nur schematisch gezeigt, wobei gerade Linien die in Wirklichkeit mäanderförmigen Stromübertragerarme 8 repräsentieren. Die Elektrodenpackungseinheit lässt sich in diesem Fall als fünflagiger Aufbau aus der Bipolarplatte 1, den beiden Elektrodenplatten 2, 3, die von identischer Bauart sein können, und den beiden Stromübertragerstrukturen 4 mit den dazu zwischen die Bipolarplatte 1 und die jeweilige Elektrodenplatte 2, 3 eingefügten Stromübertragerelementen 6 realisieren.

In entsprechenden Ausführungen ist das Stromübertragerelement 6, wie gezeigt, mit kreisförmigem Außenrand 9 gebildet, in alternativen Ausführungen besitzt der Außenrand 9 eine andere Form, z.B. oval oder mehreckig.

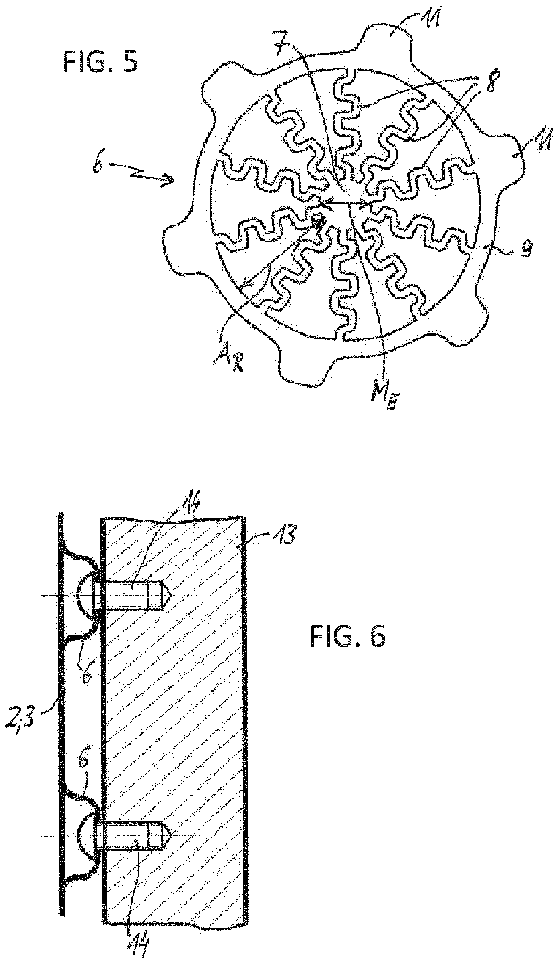

In entsprechenden Ausführungsformen ist ein radialer Abstand A_{R} zwischen der zentrischen Kontaktfläche 7 und dem Außenrand 9 größer als eine Maximalerstreckung M_{E} der zentrischen Kontaktfläche 7, wie in den gezeigten Ausführungsbeispielen realisiert und in Fig. 5 veranschaulicht. Alternativ ist dieser radiale Abstand A_{R} in anderen Realisierungen kleiner als diese Maximalerstreckung M_{E}. Dabei repräsentiert dieser radiale Abstand A_{R} die radiale Länge der Stromübertragerarme 8.

In entsprechenden Ausführungen weist das Stromübertragerelement 6 mehr als zwei Stromübertragerarme 8 auf, wie in den gezeigten Ausführungsbeispielen. Speziell sind in den gezeigten Beispielen zehn Stromübertragerarme 8 vorgesehen. In alternativen Realisierungen sind es drei oder mehr, insbesondere sieben oder mehr Stromübertragerarme 8.

In vorteilhaften Ausführungsformen ist wie in den gezeigten Beispielen für die Elektrodenpackungseinheit eine Mehrzahl der Stromübertragerelemente 6 vorgesehen, von denen die erste Stromübertragerstruktur 4 mindestens ein erstes Stromübertragerelement 6₁ und die zweite Stromübertragerstruktur 5 mindestens ein zweites Stromübertragerelement 6₂ beinhalten, wobei das erste Stromübertragerelement 6₁ und das zweite Stromübertragerelement 6₂ auf gegenüberliegenden Seiten der Bipolarplatte 1 mit sich überlappenden zentrischen Kontaktflächen 7 an der Bipolarplatte 1 angeordnet sind, wie beispielsweise aus Fig. 2 ersichtlich.

In vorteilhaften Ausführungsformen ist für die Elektrodenpackungseinheit eine Mehrzahl der Stromübertragerelemente 6 vorgesehen, von denen die erste Stromübertragerstruktur 4 mehrere über die Ausdehnung der Bipolarplatte 1 verteilt angeordnete erste Stromüberübertragerelemente 6₁ und/oder die zweite Stromübertragerstruktur 5 mehrere über die Ausdehnung der Bipolarplatte 1 verteilt angeordnete zweite Stromübertragerelemente 6₂ beinhaltet. In vorteilhaften Realisierungen sind wie bei den gezeigten Ausführungsbeispielen sowohl für die erste Stromübertragerstruktur 4 als auch für die zweite Stromübertragerstruktur 5 jeweils mehrere erste bzw. zweite Stromübertragerelemente 6₁, 6₂ vorgesehen.

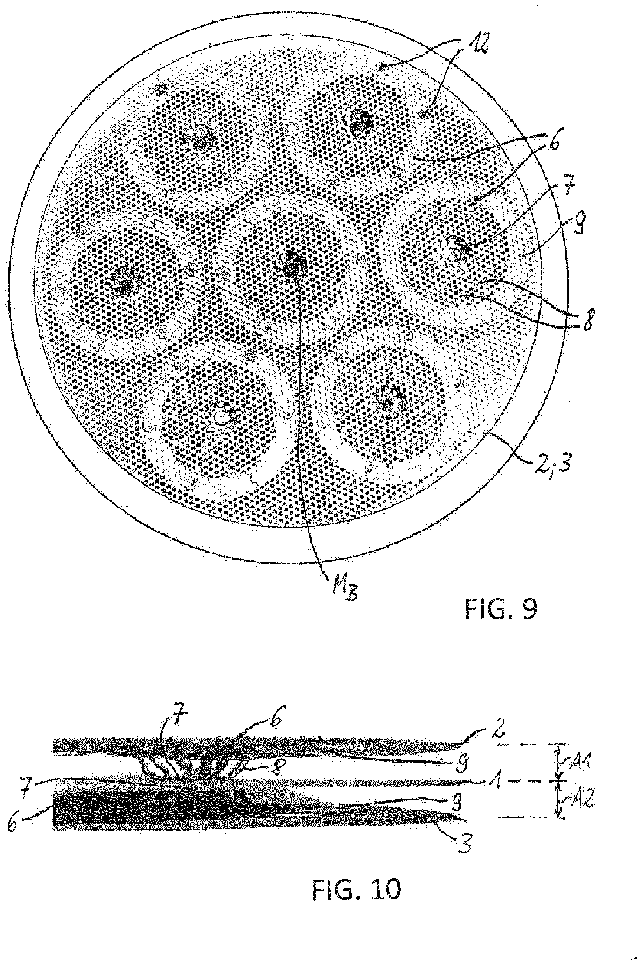

In vorteilhaften Ausführungen, wie beispielsweise in den Fig. 7 und 9 dargestellt, sind die ersten Stromübertragerelemente 6₁ und/oder die zweiten Stromübertragerelemente 6₂ mit gleichen Nachbarabständen N_{A} über eine Flächenausdehnung der Bipolarplatte 1 und der Elektrodenplatten 2, 3 hinweg oder auf unterschiedlichen Radien R₁, R₂, ... bezüglich eines Mittenbereichs M_{B} der Bipolarplatte 1 und der Elektrodenplatten 2, 3 in Umfangsrichtung verteilt angeordnet, wie in den gezeigten Ausführungsbeispielen, wobei auch beide Anordnungsvarianten gleichzeitig realisiert sein können. In diesem Fall haben die aufeinanderfolgenden Radien gleiche Abstände, und die betreffenden Stromübertragerelemente 6 sind auf dem jeweiligen Radius in Umfangsrichtung ebenfalls mit diesem Abstand voneinander angeordnet.

Die Fig. 4 und 5 veranschaulichen eine Realisierung des Stromübertragerelements 6 mit kreisringförmigem Außenrand 9, von dem radiale Fixiernasen 11 abstehen, die zur erleichterten Fixierung des Stromübertragerelements 6 an der betreffenden Elektrodenplatte 2, 3 oder alternativ der Bipolarplatte 1 dienen, z.B. durch einen Schweißvorgang, speziell z.B. durch Punktschweißen. Die gezeigte Ausführung des Stromübertragerelements sorgt auch für eine Materialeinsparung und Gewichtssenkung im Vergleich zu der Ausführung des Stromübertragerelements mit äußerem Kreisring.

Die Fig. 3 und 9 veranschaulichen Ausführungsbeispiele, bei denen der Außenrand 9 des jeweiligen Stromübertragerelements 6 kreisringförmig ist und über Befestigungspunkte 12, z.B. in Form von Schweißpunkten, mit der zugeordneten Elektrodenplatte 2, 3 mechanisch und elektrisch verbunden ist.

Fig. 6 veranschaulicht die Befestigung und elektrische Kontaktierung einer im Stapelaufbau letzten, endseitigen Elektrodenplatte 2, 3 an einer fluiddichten Endplatte 13 über die zwischenliegende endseitige Stromübertragerstruktur 4, 5 mittels Schraubverbindungen, die je eine Schraube 14 umfassen, die durch eine hierzu in die zentrische Kontaktfläche 7 des jeweiligen Stromübertragerelements 6 dieser endseitigen Stromübertragerstruktur 4, 5 eingebrachte Bohrung hindurchgeführt und in die Endplatte verschraubt ist.

Durch die mechanische Vorreckung der Stromübertragerelemente 6, d.h. durch das Herausbewegen der zentrischen Kontaktfläche 7 senkrecht zu ihrer Flächenebene gegenüber dem Außenrand 9 des jeweiligen Stromübertragerelements 6, kann ein gewünschter, definierter Abstand A1, A2 zwischen der Bipolarplatte 1 und der jeweiligen Elektrodenplatte 2, 3 eingestellt werden, wie in Fig. 10 angegeben, einschließlich der Möglichkeit, die Abstände A1, A2 der Bipolarplatte 1 zu der einen bzw. der anderen Elektrodenplatte 2, 3 unterschiedlich einzustellen, d.h. unterschiedliche Abstände der Bipolarplatte 1 zur Anode einerseits und zur Kathode andererseits. Aufgrund dieser mechanischen Auslenkung der zentrischen Kontaktfläche 7 gegenüber dem Außenrand 9 werden die Stromübertragerarme 8 etwas gelängt und bilden einen von der zentrischen Kontaktfläche 7 ausgehenden, strahlenförmigen Stromübertragerkorb, der eine federnde elastische Wirkung besitzt, so dass sich die Elektrodenfläche der Elektrodenplatten 2, 3 im Bereich eines jeweiligen Stromübertragerelements 6 und zwischen diesen in einem ausreichenden Maß einem Konturverlauf anpassen kann, was die mechanische und die elektrische Verbindung begünstigt.

Das mechanische Vorrecken erfolgt hierbei in entsprechenden Realisierungen über die elastische Dehnung der Stromübertragerelemente 6, d.h. insbesondere der Stromübertragerarme 8, hinaus, so dass die Stromübertragerelemente 6 in diesem Fall selbst als abstandsbestimmende und abstandseinhaltende Komponenten fungieren können. In alternativen Realisierungen erfolgt das mechanische Vorrecken nur bis zu einem innerhalb der elastischen Dehnung der Stromübertragerelemente 6 bzw. der Stromübertragerarme 8 bleibenden Maß. In diesem Fall wird dann durch andere Abstandselemente zwischen der Bipolarplatte 1 einerseits und der jeweiligen Elektrodenplatte 2, 3 andererseits für die Einhaltung der gewünschten Abstände A1, A2 dieser Komponenten voneinander gesorgt.

Durch die Dicke und die Breite der Stromübertragerarme 8 und ihre Anzahl kann die vom jeweiligen Stromübertragerelement 6 übertragbare Stromdichte in gewünschter Weise eingestellt bzw. angepasst werden.

Alle Bauteile der Elektrodenpackungseinheit können, wenn gewünscht, aus den gleichen Materialien, wie Stahlblech und Nickel, hergestellt werden, was z.B. hinsichtlich Temperatur-Zyklenfestigkeit von Vorteil ist. Durch entsprechende Materialauswahl für die Elektrodenplatten, die Bipolarplatte und die Stromübertragerelemente sowie durch geeignete Wahl der Anzahl an Stromübertragerelementen lassen sich zudem Kosten und Aufwand für die Fertigung der Elektrodenpackungseinheit optimieren. In der Praxis lassen sich sowohl korrosionsbeschichtete Blechmaterialien als auch nickelbeschichtete Stahlblechmaterialien oder Bleche aus Reinnickel zur Bildung der Bipolarplatte und der Elektrodenplatten verwenden. Durch entsprechende Wahl der Zusammensetzung des Stahlmaterials und der Dicke der Nickelbeschichtung ist die elastische Nachgiebigkeit, d.h. die Federwirkung, der Stromübertragerelemente mit ihren Stromübertragerarmen in einer gewünschten Weise einstellbar, als weiterer Einflussparameter neben der Mäanderform der Stromübertragerarme.

Der Materialverbrauch kann vergleichsweise gering gehalten werden. So kann beispielsweise bei einteiliger Herausformung der Stromübertragerelemente aus den Elektrodenplatten ein Materialanteil von typisch im Bereich 40% oder mehr für die Elektrodenplatte verbleiben. Die Elektrodenplatten können ohne gelochten Rand bereitgestellt werden, was scharfe Kanten vermeidet, die ein Verletzungsrisiko für die Membran darstellen könnten. Optional kann ein von der Membranseite weg umgebördelter Rand für die Elektrodenplatten vorgesehen sein.

Durch entsprechende Wahl der Anzahl an Stromübertragerelementen und deren Verteilung über die Fläche der Bipolarplatte bzw. der Elektrodenplatten hinweg kann die normale Arbeits-Stromdichte und die Maximal-Stromdichte für die Elektrodenpackungseinheit im beabsichtigten Reaktorbetrieb definiert vorgegeben werden.

Für entsprechende praktische Anwendungen kann das jeweilige Stromübertragerelement so ausgelegt werden, dass über jede zentrische Kontaktfläche ohne Kühlung eine in Reaktoren der betrachteten Art typischerweise vorkommende Stromdichte in der Größenordnung von 1A/cm² übertragen werden kann und diese Stromdichte in die zugehörige Querschnittsfläche einer typischerweise zum Beispiel ca. 0,5mm dicken Elektrodenplatte ohne erhöhte Übergangsverluste eingeleitet werden kann.

Nachstehend werden praxisgerechte Ausführungsbeispiele kurz erläutert. Entsprechend den Ausführungen gemäß den Fig. 3, 4, 9 und 10 kann die Elektrodenpackungseinheit fünflagig realisiert sein, wobei die einzelnen Komponenten, d.h. die Bipolarplatte 1, die Elektrodenplatten 2, 3 und die Stromübertragerelemente 6, durch Schweißpunkte unlösbar miteinander verbunden sind. Die beiden äußeren Platten, d.h. die beiden Elektrodenplatten 2, 3, sind die sogenannten Arbeitselektroden eines Elektrolyseurs mit entsprechendem Plattenaufbau, d.h. die Anode und die Kathode. Beide können durch einfache, plane Lochbleche gebildet sein, die an den Verbindungsstellen zu den zentrischen Kontaktflächen 7 der Stromübertragerelemente 6 ein ausgestanztes Loch mit einem Durchmesser von zum Beispiel ca. 10mm haben, wobei pro Stromübertragerelement 6 in diesen Beispielen nur ca. 78,5mm² der Elektrodenoberfläche verloren gehen.

Durch die Verwendung der separaten Stromübertragerelemente 6 und relativ kleiner Stanzlöcher in den Elektrodenplatten 2, 3 für die spätere Befestigung der Stromübertragerelemente 6 auf der Rückseite jeder Elektrodenplatte 2, 3 werden die Stromübertragerelemente 6 jeweils mit mehreren Schweißpunkten, siehe die Schweißpunkte 12, auf dem Außenrand 9 des Stromübertragerelements 6 befestigt, der als Arbeitselektroden-Befestigungsring für das Stromübertragerelement 6 fungiert. Die Stromübertragerelemente 6 werden auf der Anode und der Kathode in vorzugsweise exakt gleichem, vorgegebenem Raster angeordnet und befestigt. Dies gewährleistet, dass an allen Arbeitselektrodenstellen eine gleichmäßige Stromdichte von den Stromübertragerelementen 6 in die Elektrodenplatten 2, 3 gegeben ist und die zentrischen Kontaktflächen 7 auf der Bipolarplatte 1 beidseits fluchten, wie aus Fig. 10 ersichtlich, so dass nur ein einziger Schweißpunkt für die Befestigung zweier sich an der Bipolarplatte 1 fluchtend gegenüberliegender Stromübertragerelemente 6 benötigt wird und der Stromfluss direkt über diesen Schweißpunkt erfolgt. Für die Schweißpunkte ist vor allem eine gute elektrische Leitfähigkeit von Bedeutung, die mechanische Stabilität ist vergleichsweise unkritisch, da bei den betrachteten Anwendungen nur relativ geringe mechanische Kräfte auftreten.

Für die Fertigung einer solchen Elektrodenpackungseinheit ergibt sich somit folgende Reihenfolge. Zunächst werden die Bipolarplatte 1, die Elektrodenplatten 2, 3 und die Stromübertragerelemente 6 vorgefertigt, z.B. durch Ausstanzen oder Ausschneiden aus einem geglätteten Grundblechmaterial und bei Bedarf einer anschließenden Lochblechbildung für die Elektrodenplatten 2, 3. Aus den Elektrodenplatten 2, 3 werden die Schweißlöcher für das Anschweißen der Stromübertragerelemente 8 an der Bipolarplatte 1 gebildet, wiederum z.B. durch Ausstanzen oder Ausschneiden. Optional werden die vorgefertigten Komponenten vernickelt, und die Elektrodenplatten 2, 3 werden bei Bedarf einseitig mit einer katalytisch aktiven Beschichtung versehen. Anschließend werden die Stromübertragerelemente 6 auf der Rückseite der Elektrodenplatten 2, 3 nach einem vorgegebenen Verteilungsmuster mittels Schweißen befestigt, wonach die Bipolarplatte 1 mit den Stromübertragerelementen 6 der beiden Elektrodenplatten 2, 3 zusammengebracht wird. Durch eine Mehrlagen-Verschweißung können dann alle Stromübertragerelemente 6 auf den Elektrodenplatten 2, 3 mit der Bipolarplatte 1 zu der Elektrodenpackungseinheit als einer zusammenhängenden Baueinheit verschweißt werden. Optional können die Seitenkanten der Elektrodenplatten 2, 3 umlaufend zur Bipolarplatte 1 hin in einem entsprechenden Spezialwerkzeug geringfügig umgebördelt werden.

Eine besonders einfache und kostengünstige Herstellung der Elektrodenpackungseinheit mit minimiertem Materialverlust ist in der einteiligen Realisierung der Stromübertragerelemente 6 mit den Elektrodenplatten 2, 3 möglich. Hierbei werden die Stromübertragerelemente 6 direkt aus dem Plattenmaterial der Elektrodenplatten 2, 3 ausgeschnitten oder ausgestanzt und dann aus der Ebene der Elektrodenflächen der beiden Elektrodenplatten 2, 3 vorgereckt, um anschließend wie im zuvor erwähnten Beispiel mit der Bipolarplatte 1 verschweißt zu werden. In dieser Realisierung lässt sich der Materialverlust durch das Herausbilden der Stromübertragerelemente 6 aus den Elektrodenplatten 2, 3 auf zum Beispiel nur noch zwischen 4 % bis 6 % reduzieren. Gleichzeitig wird die Herstellung durch die in hohem Maß mögliche Verwendung von Gleichteilen erleichtert, indem nur noch zwei verschiedene Plattenelemente zur Bildung der Elektrodenpackungseinheit aus Bipolarplatte 1, Elektrodenplatten 2, 3 und Stromübertragerstrukturen 4, 5 benötigt werden.

Wie die gezeigten und die weiteren oben erläuterten Ausführungsbeispiele deutlich machen, stellt die Erfindung eine sehr vorteilhafte Elektrodenpackungseinheit für einen Stapelaufbau eines elektrochemischen Reaktors zur Verfügung, insbesondere eines Reaktors zur alkalischen Wasserelektrolyse, atmosphärisch oder unter Druck, oder eines Brennstoffzellenreaktors.

Die Elektrodenpackungseinheit lässt sich aus wenigen separaten Bauteilen aufbauen, die beispielsweise durch Punktschweißen elektrisch und mechanisch miteinander verbunden werden können, wobei vergleichsweise geringe elektrische Übergangswiderstände erzielbar sind. Eine übliche Beschichtung der Elektrodenplatten kann einzeln vor dem Zusammenbau der Elektrodenpackungseinheit oder alternativ nach Bildung der Elektrodenpackungseinheit je nach Bedarf erfolgen.

## Patentansprüche

1. Elektrodenpackungseinheit für einen Stapelaufbau eines elektrochemischen Reaktors, insbesondere eines Elektrolysereaktors oder eines Brennstoffzellenreaktors, mit
- einer fluiddichten Bipolarplatte (1),
- einer ersten Elektrodenplatte (2) und einer zweiten Elektrodenplatte (3), die jeweils mit Abstand auf gegenüberliegenden Seiten der Bipolarplatte angeordnet sind, und
- einer ersten Stromübertragerstruktur (4) zwischen der Bipolarplatte und der ersten Elektrodenplatte und einer zweiten Stromübertragerstruktur (5) zwischen der Bipolarplatte und der zweiten Elektrodenplatte,
**dadurch gekennzeichnet, dass**
- die erste und/oder die zweite Stromübertragerstruktur (4, 5) mindestens ein Stromübertragerelement (6) beinhaltet, das eine zentrische Kontaktfläche (7) und eine Mehrzahl von Stromübertragerarmen (8) aufweist, die sich mit einem mäanderförmigen Verlauf von der zentrischen Kontaktfläche radial nach außen bis zu einem Außenrand (9) des Stromübertragerelements erstrecken und die zentrische Kontaktfläche senkrecht zu ihrer Flächenebene elastisch nachgiebig am Außenrand halten,
- wobei das Stromübertragerelement mit seiner zentrischen Kontaktfläche die Bipolarplatte und mit seinem Außenrand die erste oder die zweite Elektrodenplatte kontaktiert oder mit seiner zentrischen Kontaktfläche die erste oder die zweite Elektrodenplatte und mit seinem Außenrand die Bipolarplatte kontaktiert.

2. Elektrodenpackungseinheit nach Anspruch 1, weiter **dadurch gekennzeichnet, dass** das Stromübertragerelement einteilig mit der ersten oder der zweiten Elektrodenplatte gefertigt ist und mit seiner zentrischen Kontaktfläche an der Bipolarplatte befestigt ist.

3. Elektrodenpackungseinheit nach Anspruch 1, weiter **dadurch gekennzeichnet, dass** das Stromübertragerelement als separates Bauteil mit ringförmigem Außenrand gefertigt ist, wobei es mit seiner zentrischen Kontaktfläche an der Bipolarplatte und mit seinem Außenrand an der ersten oder der zweiten Elektrodenplatte befestigt ist oder wobei es mit seiner zentrischen Kontaktfläche an der ersten oder der zweiten Elektrodenplatte und mit seinem Außenrand an der Bipolarplatte befestigt ist.

4. Elektrodenpackungseinheit nach einem der Ansprüche 1 bis 3, weiter **dadurch gekennzeichnet, dass** der Außenrand des Stromübertragerelements kreisförmig ist.

5. Elektrodenpackungseinheit nach einem der Ansprüche 1 bis 4, weiter **dadurch gekennzeichnet, dass** ein radialer Abstand (A_{R}) zwischen der zentrischen Kontaktfläche und dem Außenrand größer als eine Maximalerstreckung (M_{E}) der zentrischen Kontaktfläche ist.

6. Elektrodenpackungseinheit nach einem der Ansprüche 1 bis 5, weiter **dadurch gekennzeichnet, dass** das Stromübertragerelement mehr als zwei, insbesondere mehr als sieben, Stromübertragerarme aufweist.

7. Elektrodenpackungseinheit nach einem der Ansprüche 1 bis 6, weiter **dadurch gekennzeichnet, dass** eine Mehrzahl der Stromübertragerelemente vorgesehen ist, von denen die erste Stromübertragerstruktur mindestens ein erstes Stromübertragerelement (6₁) und die zweite Stromübertragerstruktur mindestens ein zweites Stromübertragerelement (6₂) beinhalten, wobei das erste Stromübertragerelement und das zweite Stromübertragerelement auf gegenüberliegenden Seiten der Bipolarplatte mit sich überlappenden zentrischen Kontaktflächen an der Bipolarplatte angeordnet sind.

8. Elektrodenpackungseinheit nach einem der Ansprüche 1 bis 7, weiter **dadurch gekennzeichnet, dass** eine Mehrzahl der Stromübertragerelemente vorgesehen ist, von denen die erste Stromübertragerstruktur mehrere über die Ausdehnung der Bipolarplatte verteilt angeordnete erste Stromübertragerelemente (6₁) und/oder die zweite Stromübertragerstruktur mehrere über die Ausdehnung der Bipolarplatte verteilt angeordnete zweite Stromübertragerelemente (6₂) beinhaltet.

9. Elektrodenpackungseinheit nach Anspruch 8, weiter **dadurch gekennzeichnet, dass** die ersten Stromübertragerelemente und/oder die zweiten Stromübertragerelemente mit gleichen Nachbarabständen (N_{A}) über eine Flächenausdehnung der Bipolarplatte und der Elektrodenplatten hinweg und/oder auf unterschiedlichen Radien bezüglich eines Mittenbereichs (M_{B}) der Bipolarplatte und der Elektrodenplatten in Umfangsrichtung verteilt angeordnet sind.

## Claims

1. Electrode packing unit for a stack structure of an electrochemical reactor, preferably an electrolysis reactor or a fuel cell reactor, comprising
- a fluid-tight bipolar plate (1),
- a first electrode plate (2) and a second electrode plate (3), each of which is arranged spacedly on opposite sides of the bipolar plate, and
- a first current transfer structure (4) between the bipolar plate and the first electrode plate and a second current transfer structure (5) between the bipolar plate and the second electrode plate,
**characterised in that**
- the first and/or the second current transfer structure (4, 5) contains at least one current transfer element (6) which has a central contact surface (7) and a plurality of current transfer arms (8) which extend with a meandering course radially outwards from the central contact surface to an outer edge (9) of the current transfer element and hold the central contact surface perpendicular to its surface plane in elastically yielding manner at the outer edge,
- wherein the current transfer element contacts with its central contact surface the bipolar plate and with its outer edge the first or the second electrode plate, or contacts with its central contact surface the first or the second electrode plate and with its outer edge the bipolar plate.

2. Electrode packing unit according to Claim 1, further **characterised in that** the current transfer element is manufactured integrally with the first or second electrode plate and fastened with its central contact surface to the bipolar plate.

3. Electrode packing unit according to Claim 1, further **characterised in that** the current transfer element is manufactured as a separate component with an annular outer edge, wherein it is fastened with its central contact surface to the bipolar plate and with its outer edge to the first or the second electrode plate or wherein it is fastened with its central contact surface to the first or the second electrode plate and with its outer edge to the bipolar plate.

4. Electrode packing unit according to one of Claims 1 to 3, further **characterised in that** the outer edge of the current transfer element is circular.

5. Electrode packing unit according to one of Claims 1 to 4, further **characterised in that** a radial spacing (A_{R}) between the central contact surface and the outer edge is greater than a maximum extent (M_{E}) of the central contact surface.

6. Electrode packing unit according to one of Claims 1 to 5, further **characterised in that** the current transfer element has more than two, in particular more than seven, current transfer arms.

7. Electrode packing unit according to one of Claims 1 to 6, further **characterised in that** a plurality of the current transfer elements is provided, of which the first current transfer structure contains at least one first current transfer element (6₁) and the second current transfer structure contains at least one second current transfer element (6₂), wherein the first current transfer element and the second current transfer element are arranged on opposite sides of the bipolar plate with overlapping central contact surfaces on the bipolar plate.

8. Electrode packing unit according to one of Claims 1 to 7, further **characterised in that** a plurality of the current transfer elements is provided, of which the first current transfer structure contains a plurality of first current transfer elements (6₁) distributed over the extent of the bipolar plate and/or the second current transfer structure contains a plurality of second current transfer elements (6₂) distributed over the extent of the bipolar plate.

9. Electrode packing unit according to Claim 8, further **characterised in that** the first current transfer elements and/or the second current transfer elements are distributed with identical adjacent spacing (N_{A}) over an areal extent of the bipolar plate and the electrode plates and/or in circumferential direction at different radii with regard to a centre region (M_{B}) of the bipolar plate and the electrode plates.

## Revendications

1. Ensemble à paquet d'électrodes pour une structure empilée d'un réacteur électrochimique, en particulier d'un réacteur d'électrolyse ou d'un réacteur à pile à combustible, comprenant
- une plaque bipolaire (1) étanche aux fluides,
- une première plaque d'électrode (2) et une deuxième plaque d'électrode (3), qui sont disposées chacune à distance sur des faces opposées de la plaque bipolaire, et
- une première structure de transfert de courant (4) entre la plaque bipolaire et la première plaque d'électrode et une deuxième structure de transfert de courant (5) entre la plaque bipolaire et la deuxième plaque d'électrode,
**caractérisé en ce que**
- la première et/ou la deuxième structure de transfert de courant (4, 5) contient au moins un élément de transfert de courant (6) qui présente une surface de contact centrale (7) et une pluralité de bras de transfert de courant (8) qui s'étendent selon un tracé en méandres depuis la surface de contact centrale radialement vers l'extérieur jusqu'à un bord extérieur (9) de l'élément de transfert de courant et qui maintiennent la surface de contact centrale perpendiculairement à son plan de surface de manière élastiquement souple sur le bord extérieur,
- l'élément de transfert de courant est en contact avec la plaque bipolaire par sa surface de contact centrale et est en contact avec la première ou la deuxième plaque d'électrode par son bord extérieur, ou est en contact avec la première ou la deuxième plaque d'électrode par sa surface de contact centrale et est en contact avec la plaque bipolaire par son bord extérieur.

2. Ensemble à paquet d'électrodes selon la revendication 1, **caractérisé en outre en ce que** l'élément de transfert de courant est fabriqué d'une seule pièce avec la première ou la deuxième plaque d'électrode et est fixé à la plaque bipolaire par sa surface de contact centrale.

3. Ensemble à paquet d'électrodes selon la revendication 1, **caractérisé en outre en ce que** l'élément de transfert de courant est fabriqué en tant que composant séparé avec un bord extérieur annulaire, en étant fixé par sa surface de contact centrale à la plaque bipolaire et par son bord extérieur à la première ou à la deuxième plaque d'électrode, ou en étant fixé par sa surface de contact centrale à la première ou à la deuxième plaque d'électrode et par son bord extérieur à la plaque bipolaire.

4. Ensemble à paquet d'électrodes selon l'une des revendications 1 à 3, **caractérisé en outre en ce que** le bord extérieur de l'élément de transfert de courant est circulaire.

5. Ensemble à paquet d'électrodes selon l'une des revendications 1 à 4, **caractérisé en outre en ce qu'**une distance radiale (A_{R}) entre la surface de contact centrale et le bord extérieur est supérieure à une extension maximale (M_{E}) de la surface de contact centrale.

6. Ensemble à paquet d'électrodes selon l'une des revendications 1 à 5, **caractérisé en outre en ce que** l'élément de transfert de courant présente plus de deux, en particulier plus de sept bras de transfert de courant.

7. Ensemble à paquet d'électrodes selon l'une des revendications 1 à 6, **caractérisé en outre en ce qu'**il est prévu une pluralité d'éléments de transfert de courant, dont la première structure de transfert de courant comprend au moins un premier élément de transfert de courant (6₁) et la deuxième structure de transfert de courant comprend au moins un deuxième élément de transfert de courant (6₂), le premier élément de transfert de courant et le deuxième élément de transfert de courant étant disposés sur des faces opposées de la plaque bipolaire avec des surfaces de contact centrées se chevauchant sur la plaque bipolaire.

8. Ensemble à paquet d'électrodes selon l'une des revendications 1 à 7, **caractérisé en outre en ce qu'**il est prévu une pluralité d'éléments de transfert de courant, dont la première structure de transfert de courant contient plusieurs premiers éléments de transfert de courant (6₁) répartis sur l'extension de la plaque bipolaire et/ou la deuxième structure de transfert de courant contient plusieurs deuxièmes éléments de transfert de courant (6₂) répartis sur l'extension de la plaque bipolaire.

9. Ensemble à paquet d'électrodes selon la revendication 8, **caractérisé en outre en ce que** les premiers éléments de transfert de courant et/ou les deuxièmes éléments de transfert de courant sont disposés en répartition dans la direction périphérique à des distances voisines égales (N_{A}) sur une extension de surface de la plaque bipolaire et des plaques d'électrodes et/ou sur des rayons différents par rapport à une zone centrale (M_{B}) de la plaque bipolaire et des plaques d'électrodes.
